# EUROPEAN PATENT SPECIFICATION

(11) **EP 3 300 208 B1**
(45) Date of publication and mention of the grant of the patent: **20.07.2022**
(21) Application number: 16190465.1
(22) Date of filing: 23.09.2016
(51) Int. Cl.: H02J 3/32, H02J 1/00, H02J 9/06, H02J 7/34, H02J 7/14, B64C 13/50

(54) **POWER SUPPLY APPARATUS FOR AEROSPACE ACTUATOR**
STROMVERSORGUNGSVORRICHTUNG FÜR EINEN LUFTFAHRTAKTUATOR
APPAREIL D'ALIMENTATION ÉLECTRIQUE POUR UN ACTIONNEUR D' UN VÉHICULE AÉROSPATIAL

(43) Date of publication of application: 28.03.2018
(73) Proprietor: Goodrich Actuation Systems Limited, West Midlands B90 4SS (GB)
(72) Inventor: Gietzold, Thomas, Stratford Upon Avon, Warwickshire CV37 0BQ (GB); Parkin, Joshua, Solihull, Warwickshire B90 3LE (GB)
(74) Representative: Dehns

(56) References cited:
- EP-A2- 2 070 817
- EP-A2- 2 639 921
- US-A1- 2009 302 153
- US-A1- 2009 302 153
- US-A1- 2010 109 581
- US-A1- 2014 197 681
- US-A1- 2015 061 378

## Description

The present invention relates to a power supply apparatus for an aerospace actuator. In particular, the field of the disclosure lies in the area of motor drive electronics in aircraft.

Nowadays, it is becoming increasingly common to design aircraft with at least some electric actuation instead of the previously ubiquitous hydraulic actuation. In order to supply the electricity to the actuators in far-reaching areas of the aircraft (such as the wings, for example), wires or cables must extend to those areas.

Many of the actuators on an aircraft operate in a pulsed manner. For example, aircraft ailerons or flaps on the wings are usually not moved constantly but rather intermittently, as and when they need to be altered for good control of the aircraft. Thus the power supplied to these actuators occurs in short intervals of relatively higher power, compared to the relatively much lower power supplied continuously from the aircraft.

The wires, cables and other current-carrying components at the input-side of the actuator electronics must be large enough and sized to withstand the high powers which are required by from this intermittent electricity demand. This involves having wires of significant gauge, large circuit breakers and other large equipment.

US 2009/302153 A1 discloses an electrical system for driving flight control actuators, the electrical system includes a bidirectional accumulator positioned in electrical communication with the plurality of flight control actuators to absorb excess electrical power regenerated by the plurality of flight control actuators and to provide supplemental power to the plurality of flight control actuators to thereby satisfy transient power requirements.

US 2014/197681 A1 discloses a power stabilizing device for aircraft electrical systems, wherein a power stabilizing control section controls charging and discharging of a secondary battery based on a voltage and a frequency in a secondary AC bus to stabilize the electrical system.

EP2070817 A discloses an aircraft power distribution system comprising a plurality of actuators each associated with an energy storage element for storing excess power generated by the actuators functioning in a regenerative mode.

Viewed from a first aspect, the present invention provides an aircraft comprising at least one actuator and a power supply apparatus for supplying power to the actuator as defined by claim 1.

The excess electrical energy may be energy supplied to the motor drive electronics from the grid in excess of the requirements of the motor. By storing at least one of electrical energy and regenerated electrical energy in an energy storage device and subsequently releasing the stored energy to the motor drive electronics when required for actuation of the actuator, then higher peak powers can be delivered than could be directly supplied to the motor drive electronics from the grid alone. The motor drive electronics may receive input electrical energy from the aircraft power grid at the same time as receiving electrical energy from the energy storage device, or at any given time the motor drive electronics may receive input electrical energy only from the aircraft power grid or only from the energy storage device. An energy storage device as discussed herein is provided for the motor drive electronics for each of multiple actuators on an aircraft. Thus, a power supply apparatus comprises multiple sets of energy storage devices and motor drive electronics in order to power multiple actuators.

In addition, the inventors have realised that one of the problems with equipment used for electrical power transmission in aircraft is the weight involved, in particular because the wires and other equipment must pass along a significant distance from the generator to the extremities of the aircraft, such as to the wing actuators. Given an approximate ratio of 10 between average and peak current, a weight savings for a particular actuator can be calculated in the following way.

An actuator might require 5kW at peak power at 540Vdc translating to a 9A current at its input terminals. This current demand will require at least an AWG12 (2.05 mm diameter) cable installation. Applying the invention can reduce the average power draw to 500W therefore allowing an AWG22 (0.65 mm diameter) type of cable to be used. Assuming the wingspan of a single isle twin engine transport category aircraft of 120ft (36.6 m), and the length of a 100ft (30.5 m), an average actuators distance to the power source might be well over 50ft (15.2 m) requiring about 21b (0.91kg) of power cable. This weight multiplied by the number of approx. 20 actuators can easy reach 40lb (18.1 kg) or more, which can be reduced to 4lb (1.8 kg).

Therefore, significant weight savings in an aircraft could be provided depending on the size of an aircraft, the rating of the actuator and the number of actuators. Accordingly, the wires and other components conventionally carrying power to the motor drive electronics via the grid are reduced in size since the required current in the wires and other components would be significantly reduced. Thus the present invention provides a weight saving system compared to known systems. A lighter aircraft will require less fuel to power and thus causes less environmental damage than a heavier aircraft.

Additionally, the complexity of the input power circuit could be reduced by the reduction of the size of circuit breakers and other power-trip safety devices, thus there is increased simplicity and further weight savings. Moreover, the provision of an energy storage device having stored energy allows a source of temporary back-up power should the power supply from the grid fail. Since there is a local energy storage device for each of multiple actuators having their own local motor drive electronics then power can still be supplied to these actuators at a local level if a generator of the aircraft fails or if there is a local or system-wide failure of the grid.

The energy storage device may comprise a battery and/or a supercapacitor.

The battery may be a lithium ion battery. Lithium ion batteries are rechargeable high-performance batteries which have a high energy density (energy per unit mass) compared to many other forms of energy storage device. Lithium ion batteries may have an energy density of the order of 120-140Wh/kg but are limited by the number of cycles which they can withstand (order of about 500). The specific power produced is of the order of 1000-3000 W/kg. Further, the charge time of a lithium ion battery is of the order of about 1 hour.

A supercapacitor is also known as an ultracapacitor, or a double-layer capacitor. Supercapacitors are conventionally used in applications of energy storage where the storage is to undergo frequent charge and discharge cycles at high current and short duration. Where a supercapacitor is present then the specific energy of the supercapacitor may be of the order of about 5Wh/kg and/or the specific power may be of the order of about up to 10,000 W/kg. The supercapacitor can advantageously go through many cycles of charge and discharge, of the order of 1 million, without degradation of performance. Further, the charge time of the supercapacitor may be of the order of about 10 seconds.

The energy storage device may be configured to store energy which is supplied from the grid and is not needed by the motor drive electronics. This may be energy supplied when the actuator is not being adjusted (i.e. no energy is needed by the motor drive electronics) or it may be excess energy which is surplus to the requirements of the motor drive electronics for adjusting the actuator (i.e. not all of the supplied energy is needed by the motor drive electronics). The energy storage device may also be configured to alternatively or additionally store energy which is regenerated in the motor drive electronics. For example, if an aircraft flap needs to be moved in a direction which is the same direction as the aerodynamic load is pushing on the flap, e.g. to a more streamlined position, then the energy to move the actuator can be provided by the environmental forces and electrical energy can thus be regenerated in the motor drive electronics.

In at least some embodiments, the energy storage device comprises a bi-directional power converter for controlling the flow of electrical energy between the motor drive electronics and the energy storage device.

The bi-directional power converter may allow movement of electrical energy from the input energy supplied by the grid to the energy storage device for storage in the energy storage device. This occurs for example when the energy supplied by the grid to the motor drive electronics exceeds the requirements of the motor drive electronics, such as when there is no requirement for the grid to drive the motor, or when the motor requires a smaller electrical current than can be provided by the grid. It can also occur when the motor drive electronics is able to regenerate electrical energy from an actuator movement. In this case, the excess electrical energy can pass through the bi-directional power converter to be stored in the energy storage device, unless the energy storage device is already at full capacity, in which case the bi-directional power converter may prevent further excess energy passing to the energy storage device.

The bi-directional converter may also allow flow of power in the reverse direction, for example when it is desired to drive the motor without drawing energy from the grid and/or when the energy being supplied by the grid to the motor drive electronics is insufficient for the requirements of the motor drive electronics. In this case, previously stored energy from the energy storage device can be discharged from the energy storage device, through the bi-directional power converter, and delivered to the motor drive electronics as required. Thus the stored energy can pass through the bi-directional power converter in the reverse direction to the motor drive electronics, to supplement the supplied grid energy as required.

It will be appreciated that the energy storage device will generally provide and receive DC power. The motor drive electronics may be arranged to receive DC power from the grid and/or from the energy storage device.

The grid may be an AC power grid, which may be arranged in a 3-phase or single-phase power arrangement AC power may be supplied by a generator in the aircraft or from another suitable power source. Accordingly, to power any DC electronics of the power supply apparatus, an AC/DC converter may be present.

There may be a plurality of energy storage devices for a plurality of the actuators of the aircraft. In this way there may be a local energy storage device for the motor drive electronics for each of the plurality of actuators. In this case the power supply apparatus may include other elements of the aircraft power supply system and/or may be connected thereto. The aircraft may also include a grid as discussed above, along with a generator for supplying power to the grid. The aircraft may include wiring for transmission of electrical energy to the at least one actuator. It will be appreciated that by the use of the invention then the aircraft can be made lighter and more efficient whilst still supplying the required electrical energy to the actuator(s) of the aircraft.

Viewed from a second aspect, the invention provides a method for supplying power to an aerospace actuator of an aircraft using a power supply apparatus comprising motor drive electronics and an energy storage device as defined by claim 7.

The method may comprise preventing discharged energy from the energy storage device from leaking into the grid.

The energy supplied by the energy storage device to the actuator may be in addition to and/or in excess of energy already supplied by a grid. Thus the method may include using the energy storage device to provide higher peak power levels to the aircraft actuator than the power levels that are possible without the energy storage device.

Since energy is also provided by a local energy storage device, less energy may be required from the grid and consequently the size of the wires coming from the grid may be reduced. The method may hence include reducing the size of power transmission wires and/or other power transmission devices of the aircraft compared to aircraft without the energy storage device, for example by reducing the size of power transmission wires and/or other power transmission devices whilst not reducing the capabilities of the power supply apparatus to meet the requirements of the aircraft actuator(s). As discussed above, significant weight savings can be realised as the power transmission wires may span a great length, for example from the aircraft generator to actuators on the extremities of the wings and/or tail of the aircraft.

The method may include supplying energy from the energy storage device to the actuator in the case of a power failure on the aircraft. The energy storage device may hence be used to provide a local source of temporary backup power should the generator or grid fail for some reason.

In any of the above aspects, the continuous power supplied to the motor drive electronics may be of the order of 50-500W, while the peak power supplied to the motor electronics by discharge from the energy storage may be of the order of 5-7kW.

Preferred embodiments of the present disclosure will now be described by way of example only and with reference to the accompanying drawing, in which:

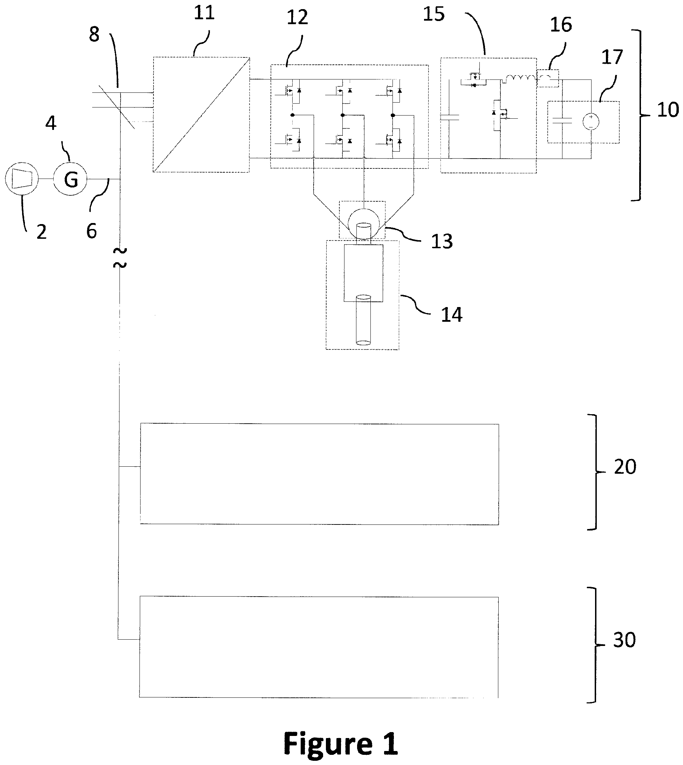

Figure 1 shows a power supply apparatus for an actuator, the power supply apparatus including an energy storage device.

As shown in Figure 1, an aircraft comprises a prime mover 2, in the form of an engine. The prime mover 2 causes a generator 4 to generate power, which is supplied to a grid 6. The power is distributed to multiple actuator power supplies 10, 20, 30 in the grid 6 via single phase or 3-phase power distribution lines 8. The distributed power is usually 3-phase AC power at 115V, or single-phase AC power at 230V AC. In the latter case, the power distribution lines 8 are a voltage bus.

In each actuator power supply 10, 20, 30, there is an AC/DC converter 11 to convert the input power into DC power. This DC power can be passed via motor drive electronics 12 to an electric motor 13 of an actuator 14. Connected to the motor drive electronics 12 is a bi-directional power converter 15. This controls the flow of power between the motor drive electronics 12 and an energy storage device 17, which takes the form of a battery in this example. The bi-directional power converter 15 also allows for power to pass from the grid 6 to the energy storage device 17 as well as permitting power to flow in the opposite direction from the energy storage device 17 to the motor drive electronics 12. A circuit breaker 16 is provided to ensure that the motor drive electronics 12 are not overloaded by a power surge from the energy storage device 17 as it discharges.

The bi-directional power converter 15 allows movement of electrical energy from the input energy supplied by the grid 6 to the energy storage device 17 for storage in the energy storage device 17. This occurs for example when the energy supplied by the grid 6 to the motor drive electronics exceeds the requirements of the motor drive electronics 12, such as when there is no requirement to drive the motor 13, or when the motor 13 requires a smaller electrical current than can be provided from the grid 6. In this case, the excess electrical energy can pass through the bi-directional power converter 15 to be stored in the energy storage device 17. If the energy storage device 17 is already at full capacity then the bi-directional power converter 15 may prevent further excess energy passing to the energy storage device 17.

The bi-directional converter 15 allows flow of power in the reverse direction, when it is desired to drive the motor 13 without drawing energy from the grid 6 and/or when the energy being supplied by the grid 6 to the motor drive electronics 12 is insufficient for the requirements of the motor 12 and should be supplemented by energy from the energy storage device 17. In this case, previously stored energy from the energy storage device 12 is discharged through the bi-directional power converter 15 and delivered to the motor drive electronics 12 for powering the motor 13 as required.

## Claims

1. An aircraft comprising multiple actuators (14) and a power supply apparatus for supplying power to the actuators, wherein for each actuator the power supply
apparatus comprises:
associated motor drive electronics (12) for actuation of a motor (13) for control of the aerospace actuator; and
a local energy storage device (17) being connected with the motor drive electronics;
wherein the motor drive electronics are configured to:
receive input electrical energy from an aircraft power grid (6);
receive electrical energy from the energy storage device; and
provide electrical energy from the grid and/or from the energy storage device to the motor; and
wherein the energy storage device is configured to store at least one of:
excess electrical energy supplied to the motor drive electronics from the grid; and
regenerated electrical energy from the motor drive electronics; and
wherein the energy storage device is configured to discharge the stored energy as electrical energy to the motor drive electronics when required; and
wherein the aircraft comprises current carrying components that convey electrical energy from the grid to the motor drive electronics and having a size that is reduced compared to the size of current carrying components needed to supply the peak power levels demanded by the actuator.

2. An aircraft as claimed in claim 1, wherein the energy storage device comprises a battery.

3. An aircraft as claimed in claim 2, wherein the battery comprises a lithium ion battery.

4. An aircraft as claimed in any preceding claim, wherein the energy storage device comprises a supercapacitor.

5. An aircraft as claimed in any preceding claim, comprising a bi-directional power converter (15) for controlling the flow of power between the motor drive electronics and the energy storage device.

6. An aircraft as claimed in any preceding claim, configured such that motor drive electronics can: (i) receive input electrical energy from the aircraft power grid at the same time as receiving electrical energy from the energy storage device, (ii) receive input electrical energy only from the aircraft power grid, or (iii) receive input electrical energy only from the energy storage device.

7. A method for supplying power to an aerospace actuator (14) of an aircraft according to any preceding claim using the power supply apparatus comprising motor drive electronics (12) and the energy storage device (17); the method comprising:
receiving input electrical energy from a grid (6) at the motor drive electronics;
storing in the energy storage device at least one of:
excess electrical energy supplied to the motor drive electronics from the grid; and
regenerated electrical energy from the motor drive electronics;
discharging electrical energy from the energy storage device to the motor drive electronics when required; and
using the motor drive electronics to provide electrical energy from the grid and/or from the energy storage device to a motor (13) for control of the aerospace actuator.

8. A method as claimed in claim 7, further comprising preventing discharged energy from the energy storage device from leaking into the grid.

9. A method as claimed in claim 7 or 8, wherein the energy supplied by the energy storage device to the motor (13) for control of the aerospace actuator is in addition to and/or in excess of energy already supplied by the grid.

10. A method as claimed in claim 9, wherein the energy supplied by the energy storage device to the motor (13) for control of the aerospace actuator is in addition to energy regenerated in the motor drive electronics.

11. A method as claimed in claim 9 or 10, comprising using the energy storage device to provide higher peak power levels to the aircraft actuator than the power levels that are possible without the energy storage device.

12. A method as claimed in any of claims 7 to 11, comprising reducing the size of power transmission wires and/or other power transmission devices of the aircraft compared to aircraft without the energy storage device.

13. A method as claimed in claim 12, wherein the method further comprises reducing the size of power transmission wires and/or other power transmission devices of the aircraft whilst not reducing the capabilities of the power supply apparatus to meet the requirements of the aircraft actuator(s).

## Patentansprüche

1. Luftfahrzeug, vielfache Aktuatoren (14) und eine Energieversorgungsvorrichtung zum Versorgen der Aktuatoren mit Energie, umfassend, wobei die Energieversorgungsvorrichtung für jeden Aktuator Folgendes umfasst:
eine zugehörige Motorantriebselektronik (12) zur Betätigung eines Motors (13) zur Steuerung des Luftfahrtaktuators; und
eine lokale Energiespeichereinrichtung (17), die mit der Motorantriebselektronik verbunden ist;
wobei die Motorantriebselektronik so konfiguriert ist, dass:
sie elektrische Eingangsenergie von einem Luftfahrzeugstromnetz (6) aufnimmt;
elektrische Energie von der Energiespeichereinrichtung aufnimmt; und
dem Motor elektrische Energie von dem Netz und/oder von der Energiespeichereinrichtung bereitstellt; und
wobei die Energiespeichereinrichtung so konfiguriert ist, dass sie mindestens eines der Folgenden speichert:
überschüssige elektrische Energie, die der Motorantriebselektronik vom Netz bereitgestellt wird; und
regenerierte elektrische Energie von der Motorantriebselektronik; und
wobei die Energiespeichereinrichtung so konfiguriert ist, dass sie, wenn erforderlich, die gespeicherte Energie als elektrische Energie an die Motorantriebselektronik abgibt; und
wobei das Luftfahrzeug stromführende Bauteile umfasst, die elektrische Energie von dem Netz zu der Motorantriebselektronik leiten und eine Größe aufweisen, die im Vergleich zu stromführenden Bauteilen, die erforderlich sind, um die Spitzenleistungsstufen, die der Aktuator erfordert, bereitzustellen, reduziert ist.

2. Luftfahrzeug nach Anspruch 1, wobei die Energiespeichereinrichtung eine Batterie umfasst.

3. Luftfahrzeug nach Anspruch 2, wobei die Batterie eine Lithium-Ionen-Batterie umfasst.

4. Luftfahrzeug nach einem der vorstehenden Ansprüche, wobei die Energiespeichereinrichtung einen Superkondensator umfasst.

5. Luftfahrzeug nach einem der vorstehenden Ansprüche, einen bidirektionalen Leistungswandler (15) zum Steuern des Energieflusses zwischen der Motorantriebselektronik und der Energiespeichereinrichtung umfassend.

6. Luftfahrzeug nach einem der vorstehenden Ansprüche, das so konfiguriert ist, dass die Motorantriebselektronik Folgendes kann: (i) elektrische Eingangsenergie von dem Luftfahrzeugstromnetz gleichzeitig mit dem Aufnehmen elektrischer Energie von der Energiespeichereinrichtung aufnehmen, (ii) elektrische Eingangsenergie nur von dem Luftfahrzeugstromnetz aufnehmen, oder (iii) elektrische Eingangsenergie nur von der Energiespeichereinrichtung aufnehmen.

7. Verfahren zum Bereitstellen von Energie für einen Luftfahrtaktuator (14) eines Luftfahrzeugs nach einem der vorstehenden Ansprüche unter Verwendung der Energieversorgungsvorrichtung, die eine Motorantriebselektronik (12) und die Energiespeichereinrichtung (17) umfasst; wobei das Verfahren Folgendes umfasst:
Aufnehmen von elektrischer Eingangsenergie von einem Netz (6) an der Motorantriebselektronik; Speichern mindestens eines der Folgenden in der Energiespeichereinrichtung:
überschüssige elektrische Energie, die der Motorantriebselektronik vom Netz bereitgestellt wird; und
regenerierte elektrische Energie von der Motorantriebselektronik;
Abgeben von elektrischer Energie von der Energiespeichereinrichtung an die Motorantriebselektronik, wenn erforderlich; und
Verwenden der Motorantriebselektronik, um elektrische Energie von dem Netz und/oder von der Energiespeichereinrichtung für einen Motor (13) zur Steuerung des Luftfahrtaktuators bereitzustellen.

8. Verfahren nach Anspruch 7, ferner das Verhindern, dass abgegebene Energie von der Energiespeichereinrichtung in das Netz kriecht, umfassend.

9. Verfahren nach Anspruch 7 oder 8, wobei die Energie, die von der Energiespeichereinrichtung für den Motor (13) zur Steuerung des Luftfahrtaktuators bereitgestellt wird, zusätzlich zu und/oder über Energie, die bereits vom Netz bereitgestellt wird, hinaus bereitgestellt wird.

10. Verfahren nach Anspruch 9, wobei die Energie, die von der Energiespeichereinrichtung für den Motor (13) zur Steuerung des Luftfahrtaktuators bereitgestellt wird, zusätzlich zu Energie, die in der Motorantriebselektronik regeneriert wird, bereitgestellt wird.

11. Verfahren nach Anspruch 9 oder 10, das Verwenden der Energiespeichereinrichtung, um höhere Spitzenleistungsstufen für den Luftfahrzeugaktuator als die Leistungsstufen, die ohne die Energiespeichereinrichtung möglich sind, bereitzustellen, umfassend.

12. Verfahren nach einem der Ansprüche 7 bis 11, das Verringern der Größe von Energieübertragungsdrähten und/oder anderen Energieübertragungseinrichtungen des Luftfahrzeugs im Vergleich zu einem Luftfahrzeug ohne die Energiespeichereinrichtung umfassend.

13. Verfahren nach Anspruch 12, wobei das Verfahren ferner das Verringern der Größe von Energieübertragungsdrähten und/oder anderen Energieübertragungseinrichtungen des Luftfahrzeugs, ohne die Fähigkeiten der Energieversorgungsvorrichtung, die Anforderungen des/der Luftfahrzeugaktuators/Luftfahrzeugaktuatoren zu erfüllen, zu verringern, umfasst.

## Revendications

1. Aéronef comprenant plusieurs actionneurs (14) et un appareil d'alimentation électrique pour alimenter les actionneurs, dans lequel, pour chaque actionneur, l'appareil d'alimentation électrique comprend :
une électronique d'entraînement de moteur associée (12) pour l'actionnement d'un moteur (13) pour la commande de l'actionneur aérospatial ; et
un dispositif de stockage d'énergie local (17) étant connecté à l'électronique d'entraînement de moteur ;
dans lequel l'électronique d'entraînement de moteur est configurée pour :
recevoir de l'énergie électrique d'entrée d'un réseau électrique d'aéronef (6) ;
recevoir de l'énergie électrique du dispositif de stockage d'énergie ; et
fournir de l'énergie électrique du réseau et/ou du dispositif de stockage d'énergie au moteur ; et
dans lequel le dispositif de stockage d'énergie est configuré pour stocker au moins l'une :
d'une énergie électrique en excès fournie à l'électronique d'entraînement de moteur à partir du réseau ; et
d'une énergie électrique régénérée à partir de l'électronique d'entraînement de moteur ; et
dans lequel le dispositif de stockage d'énergie est configuré pour décharger l'énergie stockée sous forme d'énergie électrique vers l'électronique d'entraînement de moteur lorsque cela est nécessaire ; et
dans lequel l'aéronef comprend des composants porteurs de courant qui acheminent l'énergie électrique du réseau vers l'électronique d'entraînement de moteur et ayant une taille qui est réduite par rapport à la taille des composants porteurs de courant nécessaires pour fournir les niveaux de puissance de crête demandés par l'actionneur.

2. Aéronef selon la revendication 1, dans lequel le dispositif de stockage d'énergie comprend une batterie.

3. Aéronef selon la revendication 2, dans lequel la batterie comprend une batterie lithium-ion.

4. Aéronef selon une quelconque revendication précédente, dans lequel le dispositif de stockage d'énergie comprend un supercondensateur.

5. Aéronef selon une quelconque revendication précédente, comprenant un convertisseur de puissance bidirectionnel (15) pour commander le flux de puissance entre l'électronique d'entraînement de moteur et le dispositif de stockage d'énergie.

6. Aéronef selon une quelconque revendication précédente, configuré de sorte que l'électronique d'entraînement de moteur peut : (i) recevoir de l'énergie électrique d'entrée du réseau électrique d'aéronef en même temps qu'elle reçoit de l'énergie électrique du dispositif de stockage d'énergie, (ii) recevoir de l'énergie électrique d'entrée uniquement du réseau électrique d'aéronef, ou (iii) recevoir de l'énergie électrique d'entrée uniquement du dispositif de stockage d'énergie.

7. Procédé de fourniture de puissance à un actionneur aérospatial (14) d'un aéronef selon une quelconque revendication précédente à l'aide de l'appareil d'alimentation électrique comprenant une électronique d'entraînement de moteur (12) et le dispositif de stockage d'énergie (17) ; le procédé comprenant :
la réception de l'énergie électrique d'entrée d'un réseau (6) au niveau de l'électronique d'entraînement de moteur ; le stockage dans le dispositif de stockage d'énergie d'au moins l'une :
d'une énergie électrique en excès fournie à l'électronique d'entraînement de moteur à partir du réseau ; et
d'une énergie électrique régénérée à partir de l'électronique d'entraînement de moteur ;
la décharge de l'énergie électrique du dispositif de stockage d'énergie vers l'électronique d'entraînement de moteur lorsque cela est nécessaire ; et
l'utilisation de l'électronique d'entraînement de moteur pour fournir de l'énergie électrique à partir du réseau et/ou du dispositif de stockage d'énergie à un moteur (13) pour la commande de l'actionneur aérospatial.

8. Procédé selon la revendication 7, comprenant en outre le fait d'empêcher l'énergie déchargée du dispositif de stockage d'énergie de fuir dans le réseau.

9. Procédé selon la revendication 7 ou 8, dans lequel l'énergie fournie par le dispositif de stockage d'énergie au moteur (13) pour la commande de l'actionneur aérospatial est en plus et/ou en excès de l'énergie déjà fournie par le réseau.

10. Procédé selon la revendication 9, dans lequel l'énergie fournie par le dispositif de stockage d'énergie au moteur (13) pour la commande de l'actionneur aérospatial s'ajoute à l'énergie régénérée dans l'électronique d'entraînement de moteur.

11. Procédé selon la revendication 9 ou 10, comprenant l'utilisation du dispositif de stockage d'énergie pour fournir des niveaux de puissance de crête plus élevés à l'actionneur d'aéronef que les niveaux de puissance qui sont possibles sans le dispositif de stockage d'énergie.

12. Procédé selon l'une quelconque des revendications 7 à 11, comprenant la réduction de la taille des fils de transmission de puissance et/ou d'autres dispositifs de transmission de puissance de l'aéronef par rapport à l'aéronef sans le dispositif de stockage d'énergie.

13. Procédé selon la revendication 12, dans lequel le procédé comprend en outre la réduction de la taille des fils de transmission de puissance et/ou d'autres dispositifs de transmission de puissance de l'aéronef sans réduire les capacités de l'appareil d'alimentation électrique de répondre aux exigences du ou des actionneurs d'aéronef.
